(19) Europäisches Patentamt
European Patent Office
Office européen des brevets

(11) Veröffentlichungsnummer: **0 098 585**
**A1**

(12) **EUROPÄISCHE PATENTANMELDUNG**

(21) Anmeldenummer: **83106558.6**

(22) Anmeldetag: **05.07.83**

(51) Int. Cl.³: **H 01 M 12/00**, H 01 M 6/24, H 01 M 10/00

(30) Priorität: **05.07.82 DE 3225077**
**28.10.82 DE 3240010**
**10.06.83 DE 3320982**

(43) Veröffentlichungstag der Anmeldung: **18.01.84 Patentblatt 84/3**

(84) Benannte Vertragsstaaten: **AT BE CH DE FR GB IT LI LU NL SE**

(71) Anmelder: **Bürkle, Walter, Kelterweg 29, D-7036 Schönaich (DE)**
Anmelder: **Bürkle, Kurt, Kelterweg 31, D-7036 Schönaich (DE)**

(72) Erfinder: **Weimer, Günther, Dipl.-Ing., Baiersbronner Strasse 46, D-7030 Böblingen (DE)**

(74) Vertreter: **König, Oskar, Dr.-Ing. Dipl.-Phys., Klüpfelstrasse 6 Postfach 51, D-7000 Stuttgart 1 (DE)**

(54) **Elektrochemisches Element.**

(57) Elektrochemisches Element, welches eine metallische erste Elektrode (27) und einen mit ihr beim Entladen chemisch reagierenden, gelöstes Metallsalz enthaltenden ersten Elektrolyten (31) aufweist. Es hat ferner eine zweite Elektrode (11), der ein zweiter Elektrolyt (25) zugeordnet ist, der vom ersten Elektrolyten durch eine poröse Trennwand (22) getrennt ist. Im zweiten Elektrolyten (25) werden beim Entladen des Elementes negative OH-Ionen gebildet, für die die Trennwand durchlässig ist. Die Trennwand wirkt als eine den Übertritt des Metalls und der Säurereste des im ersten Elektrolyten gelösten Metallsalzes in den zweiten Elektrolyten verhindernde Sperre.

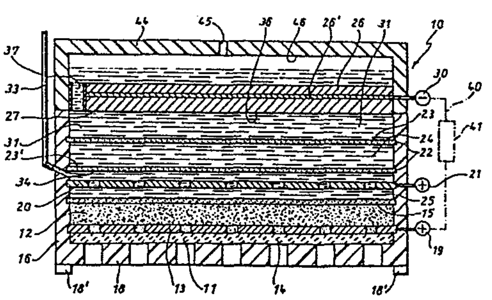

EP 0 098 585 A1

ACTORUM AG

0098585

Herr Walter Bürkle, Ing., D-7036 Schönaich
Herr Kurt Bürkle, Kaufmann, D-7036 Schönaich

# Elektrochemisches Element

Die Erfindung betrifft ein elektrochemisches Element gemäß dem Oberbegriff des Anspruches 1.

Ein bekanntes elektrochemisches Element dieser Art ist das Daniell-Element ("Lexikon der Physik", Franckh'sche Verlagshandlung Stuttgart, 2. Auflage, 1959, Seite 199), welches das System $Cu/CuSO_4/ZnSO_4/Zn$ aufweist. Die die beiden Elektrolyten bildenden sauren Zink- und Kupfersulfatlösungen, die also beide pH-Werte kleiner 7 haben, sind durch eine poröse Tonwand getrennt. Bei Stromlieferung geht Zink der die negative Anode bildenden Zink-Elektrode in Lösung, wobei die positiven Zinkionen die negativen $SO_4$-Ionen durch die poröse Tonwand hindurch zu sich herüberziehen. Die frei werdenden positiven Kupfer-Ionen wandern zur zweiten Elektrode, die die

positive Kathode bildet und eine Kupferplatte ist. Beim Aufladen laufen die umgekehrten Reaktionen ab. Das Daniell-Element bildet also ein Sekundärelement. Es hat u. a. den Nachteil, daß seine Energiedichte und damit seine Kapazität relativ klein ist, weil die als zweiter Elektrolyt dienende Kupfersulfatlösung rasch verarmt, da die den Säurerest bildenden $SO_4$-Ionen der Kupfersulfatlösung in die den ersten Elektrolyten bildende Zinksulfatlösung abwandern mit der Folge rascher Erschöpfung dieses Sekundärelementes. Auch tritt unvermeidlich Vermischung der beiden Elektrolyten durch die poröse Tonwand hindurch ein,da sie solche Durchlässigkeit haben muß, daß die negativen Säurereste $SO_4$ des zweiten Elektrolyten als Träger der negativen Ladungen in den ersten Elektrolyten einwandern können. Diese notwendige Durchlässigkeit für die Säurereste "$SO_4$" macht damit die poröse Tonwand notwendigerweise auch für die Metallionen Zn und Cu der Elektrolyte durchlässig, da diese niedrigeres Atomgewicht haben als dem Molekulargewicht des Säurerestes $SO_4$ entspricht. Das Daniell-Element konnte sich deshalb nicht in nennenswertem Umfange in die Praxis einführen und spielte im wesentlichen nur in den Anfängen der Elektrotechnik die Rolle eines Spannungsnormals.

Zur Vermeidung der beschriebenen Verarmung der Kupfersulfatlösung wurde ein Meidinger-Element bekannt, bei dem durch ein Vorratsgefäß mit Kupfersulfat-Kristallen für die Aufrechterhaltung der Konzentration der Kupfersulfatlösung des Daniell-Elementes gesorgt wurde. Dies ist jedoch baulich aufwendig und vermeidet dennoch relativ rasche Erschöpfung des Elementes und dessen rasche Selbstentladung nicht. Auch die Energiedichte sowohl des Daniellals auch des Meidinger-Elementes ist relativ gering, d. h. es benötigt bei gegebener Kapazität (in Wh) relativ große Volumen.

Es ist deshalb eine Aufgabe der Erfindung, ein elektrochemisches Element der eingangs genannten Art zu schaffen, welches geringe Selbstentladung, hohe Lebensdauer und hohe Energiedichte aufweisen kann.

Diese Aufgabe wird erfindungsgemäß durch ein elektrochemisches Element gemäß Anspruch 1 gelöst.

Dieses erfindungsgemäße elektrochemische Element weist nur sehr geringe Selbstentladung auf. Der zweite Elektrolyt erschöpft sich nicht, weil beim Entladen OH-Ionen die Ladungsträger und, falls es ein Sekundärelement ist, beim Laden H-Ionen die Ladungsträger in den Elektrolyten bilden, die durch die Trennwand hindurch wandern. Das Molekulargewicht der OH-Ionen ist sehr gering, nämlich 17 und

das Atomgewicht der H-Ionen beträgt sogar nur 1. In jedem Fall ist dieses Molekulargewicht bzw. dieses Atomgewicht kleiner als das Atomgewicht der in dem zweiten Elektrolyten befindlichen Metallionen, wenn, wie bevorzugt vorgesehen, der zweite Elektrolyt mindestens eine Metallverbindung gelöst enthält. Es ist zwar auch möglich, den zweiten Elektrolyten so vorzusehen, daß die in ihm gelöste chemische Verbindung keine Metallverbindung ist, sondern beispielsweise eine wässrige Salmiaklösung. Das Salmiak $NH_4Cl$ bildet im Wasser unter Abspaltung des Chlors $NH_4OH$-Moleküle, deren Molekulargewicht also 35 ist, also mehr als doppelt so groß als das der OH-Ionen. Es kann deshalb die den ersten vom zweiten Elektrolyten trennende Trennwand stets so ausgebildet werden, daß sie sowohl die im ersten Elektrolyten enthaltenen, gegebenenfalls hydratisierten Metallionen, als auch die im zweiten Elektrolyten enthaltenen gegebenenfalls hydratisierten Metallionen oder andere Moleküle mit größeren Molekulargewichten als dem von OH-Molekülen nicht durchlässt, sondern nur die OH-Ionen und selbstverständlich auch die H-Ionen, da diese noch geringeres Atomgewicht haben. Ferner kann die Trennwand zweckmäßig so gewählt sein, daß sie auch die Lösungsmittel der Elektrolyten, die dann identische chemische Konstitution haben, vorzugsweise Wasser sein können, durchläßt.

Das erfindungsgemäße Element kann auch als nichtaufladbares Primärelement ausgebildet werden. Auch in diesem Falle darf die Trennwand nicht durchlässig sein für die im ersten Elektrolyten enthaltenen Säurereste.

Ein weiterer Vorteil erfindungsgemäßer Elemente ist, daß sie sehr hohe Energiedichte erhalten können, da sie nur geringe Mengen an Elektrolyten benötigen, weil sie beim Entladen nicht verarmen. Die Elektrolyten können im allgemeinen zweckmäßig Flüssigkeiten sein, gegebenenfalls jedoch auch pastenförmigen Charakter erhalten oder mindestens ein Elektrolyt kann in einem porösen Trägermedium aufgesogen sein.

Das Volumen eines erfindungsgemäßen Elementes kann infolge des geringen Elektrolytbedarfes sehr klein gehalten werden. Erfindungsgemäße Elemente lassen sich auch relativ kostengünstig herstellen und sind überdies umweltfreundlich, da sie keine giftigen Bestandteile, wie z. B. Quecksilber und Cadmium zu enthalten brauchen.

Das erfindungsgemäße Element zeichnet sich im Falle seiner Ausbildung bzw. seines Einsatzes als Sekundärelement auch dadurch aus, daß es selbst bei Ausbildung als Metall-Sauerstoff-Sekundärelement sehr großen Anzahlen von Lade- und Entladenzyklen ausgesetzt werden kann. Und zwar bilden sich im Gegensatz zu den bekannten Metall-Sauerstoff-Sekundärelementen, die meist als Metall-Luft-Sekundärelemente ausgebildet sind, beim Laden keine Dendriten an der ersten

0098585

Elektrode. Damit behebt die Erfindung mit einem Schlag alle bei den bisher bekannten Metall-Sauerstoff-Elementen durch die beim Laden an der ersten Elektrode entstehenden Dendriten auftretenden Schwierigkeiten, die den praktischen Einsatz der bekannten Metall-Sauerstoff-Elemente vielfach verhinderten und zumindest die Anzahl der erreichbaren Lade- und Entladezyklen stark herabsetzten, so daß sich Metall-Sauerstoff-Sekundärelemente bisher nicht gegen die an sich wesentlich teureren und weniger umweltfreundlichen Elemente der Blei- und Nickel/Cadmium-Akkumulatoren durchsetzen konnten. Die Erfindung behebt also auch diese bisher bei Metall-Sauerstoff-Sekundärelementen vorhandenen grundsätzlichen Schwierigkeiten auf einfache Weise.

Die beim Entladen des erfindungsgemäßen Elementes vom zweiten in den ersten Elektrolyten einwandernden OH-Ionen können mit dem Metall der ersten Elektrode bzw. mit im ersten Elektrolyten enthaltenen Metallionen mindestens eine Verbindung eingehen, insbesondere Metallhydroxid und/oder Metalloxid bilden, das gegebenenfalls aus dem ersten Elektrolyten ausgefällt wird, jedoch in dem den ersten Elektrolyten enthaltenden Bereich des Elementes verbleibt. Bei Ausbildung des erfindungsgemäßen Elementes als Sekundärelement wandern beim Laden aus dem zweiten Elektrolyten positive H-Ionen durch die Trennwand hindurch in den ersten Elektrolyten ein und reduzieren die in ihm beim Entladen gebildeten

Metallverbindung bzw. -verbindungen zu positiv geladenen Metallionen und Wassermolekülen. Die Metallionen wandern dann zur ersten Elektrode und vereinigen sich mit den an ihr bereits befindlichen Metallatomen so fest, daß die erste Elektrode eine massive Elektrode ist, deren Dicke beim Laden durch die sich an ihr fortlaufend anlagernden Metallionen ungefähr gleichmäßig wächst. Insbesondere bilden sich keine Dendriten und auch keine körnigen, leicht abwischbaren Anlagerungen der zu ihr gelangenden Metallionen. Diese Rückbildung der ersten Elektrode während des Ladens zu einer wiederum massiven, in sich festen Elektrode ungefähr gleichmäßiger Dicke erlaubt, sehr hohe Anzahlen von Lade- und Entladezyklen zu erreichen. Die Erfindung schafft damit insbesondere auch die Möglichkeit, Metall-Sauerstoff-Sekundärelemente mit bisher nicht erreichbaren hohen Anzahlen von Lade- und Entladezyklen zu schaffen. Bei den vorerwähnten Dendriten, die bei den bekannten Metall-Sauerstoff-Sekundärelementen beim Laden entstehen und die bei erfindungsgemäßen Metall-Sauerstoff-Sekundärelementen nicht mehr entstehen, handelt es sich um nadelförmige Gebilde, die aus der ersten Elektrode beim Laden herauswachsen und die leicht abbrechen können und die auch leicht zu Kurzschlüssen und allgemein recht rasch zum Unbrauchbarwerden des Sekundärelementes führen.

Unter einem Metall-Sauerstoff-Element ist auch der Fall mit verstanden, daß es sich um ein sogenanntes Metall-Luft-Element handelt, bei dem also der Sauerstoff durch die atmosphärische Umgebungsluft geliefert wird. Gegebenenfalls ist es auch möglich, den Sauerstoff anderen Quellen zu entnehmen, beispielsweise reinen Sauerstoff vorzusehen oder ihn einem Speicher, z. B. Braunstein, wie es beim Leclanché-Element der Fall ist, zu entnehmen. Letzteres kann insbesondere dann infrage kommen, wenn das erfindungsgemäße Element als Primärelement vorgesehen ist, also nicht wiederaufladbar ist. Gegenüber dem bekannten Leclanché-Element, das einen einzigen Elektrolyten aufweist, hat ein gemäß einer solchen Weiterbildung der Erfindung ausgebildetes Primärelement mit Braunstein als Sauerstoffträger u. a. den Vorteil, daß anstelle von Zink für die erste Elektrode höhere Spannungen erzeugendes Metall vorgesehen werden kann, vorzugsweise Aluminium. Der erste Elektrolyt kann dann eine Aluminium-Salzlösung sein, beispielsweise eine wäßrige Aluminium-Sulfatlösung. Ein erfindungsgemäßes Aluminium-Sauerstoff-Element (einschließlich Aluminium-Luft-Element) ermöglicht theoretisch elektrische Spannungen von ca. 2,7 Volt, die also sehr hoch sind, unabhängig davon, ob es als Primärelement oder Sekundärelement dient. Man kann mit einem solchen Aluminium-Sauerstoff-Element also Akkus vorbestimmter Gleichspannung mit einer geringeren Anzahl von in Reihe hintereinander geschalteten Elementen als bei den heute meist üblichen

0098585

Blei-Akkumulatoren oder Nickel/Cadmium-Akkumulatoren erzielen.

Bei Ausbildung des erfindungsgemäßen Elementes als Metall-Sauerstoff-Element bildet die Sauerstoff-Kathode die zweite Elektrode, die den positiven Pol des Elementes beim Entladen bildet. Wie erwähnt, kann der Sauerstoff vorzugsweise durch atmosphärische Luft geliefert werden. Die Sauerstoff-Kathode kann vorzugsweise als Katalysator Aktivkohlepulver enthalten. In dem Aktivkohlepulver oder unmittelbar an ihm anliegend kann ein metallisches Lochblech oder Gitter in Kontakt mit dem Aktivkohlepulver sein, an das der positive Pol des Elementes galvanisch angeschlossen ist. Dieser positive Pol kann sowohl den positiven Pol beim Entladen als im Falle eines Sekundärelementes auch den positiven Pol beim Laden bilden. Es ist jedoch auch möglich und kann bevorzugt vorgesehen sein, daß das Element bei Ausbildung als Metall-Sauerstoff-Sekundärelement eine dritte Elektrode aufweist, an die zum Laden der positive Pol der Ladestromquelle angeschlossen wird, wobei die dritte Elektrode sich außerhalb des Aktivkohlepulvers jedoch noch innerhalb des zweiten Elektrolyten befindet. Dies hat den Vorteil, daß der sich beim Laden an der dritten Elektrode bildende atomare Sauerstoff von der Aktivkohle weggehalten werden kann, also nicht zu ihr zu gelangen braucht. Und zwar kann atomarer Sauerstoff die Aktivkohle oxidieren und so das Altern des Elementes beschleunigen. Da ein erfindungsgemäß ausgebildetes Sekundärelement sehr

viele Lade- und Entladezyklen aushalten kann, altert es also an sich nur sehr langsam und es ist deshalb besonders zweckmäßig, auch die eine Alterungsquelle darstellende Oxidation der Aktivkohle auszuschalten, was durch die beschriebene Maßnahme der dritten Elektrode erfolgen kann, die beim Laden nicht verändert wird.

Die den ersten und den zweiten Elektrolyten trennende Trennwand kann irgendeine geeignete Ausbildung haben, die die in Anspruch 1 beschriebenen Eigenschaften ergibt. Im einfachsten Fall kann sie ein einziges Molekularsieb sein, dessen Trenngrenze größer als 17 ist, damit OH-Ionen durch sie hindurchgehen können. Als Molekularsiebe werden in vorliegender Erfindung Diaphragmen, Membranen oder dergl. beispielsweise an sich bekannte Membranen für die Umkehrosmose, verstanden, die gegenüber dem Elektrolyten, mit dem sie in Berührung kommen, ausreichend stabil sind. Unter Trenngrenze eines Molekularsiebes ist verstanden, daß es Moleküle mit einem Molekulargewicht kleiner als die Trenngrenze durchläßt und Moleküle mit einem Molekulargewicht größer als die Trenngrenze nicht durchläßt. Bei der Erfindung muß die Trenngrenze des Molekularsiebes also größer als 17 sein. Sie darf jedoch auch nicht zu groß sein, sondern muß so getroffen sein, daß sie die an den beim Entladen stattfindenden elektrochemischen Reaktionen teilnehmenden Metallionen und hydratisierten Metallionen des ersten Elektrolyten und gegebenenfalls auch des zweiten Elektrolyten nicht durchläßt, desgleichen nicht Säurereste des ersten Elektrolyten und im zweiten Elektrolyten

vorhandene nicht dissoziierte Hydroxidverbindungen, wie z. B. Kaliumhydroxid, falls der zweite Elektrolyt Kalilauge ist.

Der erste Elektrolyt kann ein saurer Elektrolyt sein, dessen pH-Wert dann also kleiner als 7 ist. Es ist jedoch auch denkbar, daß sein pH-Wert in vielen Fällen zweckmäßig auch gleich 7 oder etwas größer 7 sein kann. Ein pH-Wert von 7 oder etwas größer als 7 setzt dabei voraus, daß der erste Elektrolyt nicht nur Metallsalz in Lösung enthält, sondern noch mindestens einen basischen Zusatz, der seinen pH-Wert auf 7 oder etwas darüber anhebt. Dies führt dazu, daß beim Entladen sich Metalloxid in erhöhtem Maße bildet und, wenn das Lösungsmittel des ersten Elektrolyten Wasser ist, beim Entladen weniger Wasser im Metallhydroxid gebunden wird. Der Wasserverbrauch beim Entladen ist also geringer und der Wasservorrat im Element kann entsprechend geringer und damit das Element noch etwas geringeres Volumen erhalten.

Der zweite Elektrolyt kann zweckmäßig einen pH-Wert größer als 7 haben, da hierdurch relativ große Entladeströme des Elementes erreicht werden. Es ist jedoch auch möglich, in Sonderfällen den pH-Wert des zweiten Elektrolyten ungefähr auf 7 einzustellen, wenn relativ geringe Entladeströme ausreichen. Es sei hier noch erwähnt, daß man die Entladeströme auch dadurch vergrößern kann, indem man die zweite Elektrode aus Edelmetall ausbildet, doch ist dies teuer. Bevorzugt kann die zweite Elektrode eine billige Sauerstoff-Elektrode sein oder, falls sie aus Metall besteht, kann sie

zweckmäßig aus einem billigen Metall bestehen, das beim Entladen gegen die erste Elektrode positiv ist.

Es sei an einem Beispiel dargelegt, in welchem Bereich die Trenngrenze eines Molekularsiebes, wenn es allein die Trennwand bildet, liegen muß: Es sei angenommen, daß die erste Elektrode aus Zink besteht und die zweite Elektrode eine Luft-Elektrode ist. Der erste Elektrolyt sei eine wässrige Zinksulfatlösung und der zweite Elektrolyt sei Kalilauge, d. h eine wässrige KOH-Lösung. Die Trennwand soll dann durchlässig für Wasser, H- und OH-Ionen sein. Sie soll dagegen nicht durchlässig sein für die Metallionen, KOH und $SO_4$. Die Metallionen haben Atomgewichte von 65,4 (Zink) bzw. 39,1 (Kalium). Der Säurerest $SO_4$ hat ein Molekulargewicht 96, KOH von 56,1. Demzufolge muß die Trenngrenze des Molekularsiebes größer als das Molekulargewicht von Wasser, das heißt größer als 18, und - da die Kaliumionen hydratisieren, wie üblicherweise alle Metallionen - kleiner als das Molekulargewicht der hydratisierten Kaliumionen sein. Hydratisierte Kaliumionen haben ein Molekulargewicht von über 50, so daß die obere Trenngrenze des Molekularsiebes tatsächlich sogar wesentlich größer als 39,1 (Kalium) sein darf, sogar noch über 50 liegen darf. Es dürfen also bei Ausbildung der Trennwand als ein einziges Molekularsieb auch nicht die Kaliumionen des zweiten Elektrolyten von dem Molekularsieb hindurch gelassen werden können, da sie eine starke Affinität zu dem Säurerest $SO_4$ des Zinksulfates aufweisen und deshalb in den ersten Elektrolyten abwandern und dort beim Laden Dendriten erzeugen würden.

0098585

Molekularsiebe sind umso teurer, je kleiner ihre Trenngrenze ist und umso größer ist auch ihr Widerstand, den sie der Ionenwanderung beim Entladen bzw. Laden entgegensetzt. Es ist deshalb an sich erwünscht, Molekularsiebe relativ großer Trenngrenze einsetzen zu können. Dies gelingt gemäß einer Weiterbildung dadurch, daß die Trennwand nicht aus einem einzigen Molekularsieb gebildet ist, sondern aus zwei Molekularsieben und einem zwischen ihnen befindlichen dritten Elektrolyten besteht. Es gelingt dann bei Einsatz eines geeigneten dritten Elektrolyten zu erreichen, daß die Trenngrenze der beiden Molekularsiebe größer als das Atomgewicht der im zweiten Elektrolyten befindlichen hydratisierten Metallionen sein kann, bei denen es sich vorzugsweise um Alkalimetallionen handeln kann, insbesondere um Kalium-, Natrium- oder Lithiumionen. Dies dürfte sich aufgrund von mit Alkalimetallverbindungen durchgeführter Versuche dadurch erklären lassen, daß an sich Alkalimetallionen starke Affinität zu den in erster Linie infrage kommenden Säureresten des ersten Elektrolyten haben, beispielsweise zu $SO_4$-Ionen, jedoch kann diese Affinität nicht zum Ausbruch kommen, wenn der dritte Elektrolyt so ausgewählt wird, daß in ihm die Metallionen des zweiten Elektrolyten ihre Fähigkeit verlieren, das zwischen dem dritten und dem ersten Elektrolyten befindliche Molekularsieb zu passieren. Zu diesem Zweck kann der dritte Elektrolyt vorzugsweise so ausgewählt sein, daß er in einem Lösungsmittel gelöstes Metallsalz enthält, wobei das Lösungsmittel zweckmäßig dem Lösungsmittel des ersten und des zweiten Elektrolyten entsprechen kann. Das Metall des im dritten

Elektrolyten gelösten Metallsalzes kann vorzugsweise dem Metall des zweiten Elektrolyten und der Säurerest dem Säurerest des ersten Elektrolyten entsprechen.

Wenn beispielsweise der erste Elektrolyt aus wässriger Zinksulfatlösung und der zweite Elektrolyt aus Kalilauge besteht, kann der dritte Elektrolyt zweckmäßig aus einer wäßrigen Lösung von Kaliumsulfat bestehen. Es genügt dann, wenn in diesem Beispiel die Trenngrenze der Molekularsiebe kleiner als das Molekulargewicht von KOH (Kaliumhydroxid) ist, wobei sie jedoch größer als das Atomgewicht von Kalium sein darf, also größer als 39,1 und kleiner als 56,1 sein kann, beispielsweise kann die Trenngrenze 50 betragen. Jedes Molekularsieb ist dann zwar für die Kalium-Ionen an sich durchlässig, desgleichen selbstverständlich für H, OH und $H_2O$, jedoch nicht für KOH, Zn und $SO_4$. Obwohl die Kalium-Ionen an sich die Molekularsiebe passieren könnten, gehen sie jedoch zumindest nicht durch das den dritten Elektrolyten vom ersten Elektrolyten trennende Molekularsieb einer Trenngrenze größer 39,1 und kleiner 56,1 hindurch, weil die im dritten Elektrolyten befindlichen Kalium-Atome überhaupt nicht die Tendenz haben, durch das den dritten Elektrolyten vom ersten Elektrolyten trennende Molekularsieb zu wandern, was auf ihre Bindung an die im dritten Elektrolyten befindlichen

0098585



$SO_4$-Ionen zurückzuführen sein dürfte. An sich haben die im zweiten Elektrolyten befindlichen Metallionen, z. B. Kalium-Ionen, normalerweise große Affinität zu den im ersten Elektrolyten befindlichen Säureresten, z.B. zu $SO_4$. Durch die beschriebene Ausbildung der Trennwand, gemäß der sie aus zwei Molekularsieben und dem dritten Elektrolyten besteht, kommt diese Affinität nicht zur Entfaltung, da im dritten Elektrolyten bereits gleiche Säurereste vorhanden sind und die an diese Säurereste gebundenen Metallionen haben dann keine Affinität mehr zu den im ersten Elektrolyten befindlichen gleichen Säureresten. Auf diese Weise wirkt eine derart ausgebildete Trennwand für Metallionen des zweiten Elektrolyten, selbst wenn diese beiden Molekularsiebe für diese Metallionen an sich durchlässig sind, wie eine Sperre, die ihren Übergang in den ersten Elektrolyten verhindert. Es ist auch denkbar, daß die Säurereste im ersten und im dritten Elektrolyten chemisch unterschiedlich sein können. Es kommt darauf an, daß die Trennwand, wenn ihre Molekularsiebe für Metallionen oder dergl. des zweiten Elektrolyten durchlässig sind, die nicht in den ersten Elektrolyten gelangen sollen, der dritte Elektrolyt die Affinität dieser Metallionen oder dergl. zu dem Säurerest im ersten Elektrolyten so herabsetzt oder ganz aufhebt, daß diese Metallionen oder dergl. aus dem dritten Elektrolyten nicht in den ersten Elektrolyten einwandern.

Nach der Erfindung ausgebildete Metall-Sauerstoff-Elemente zeichnen sich durch sehr hohe Energiedichten, geringes Gewicht und lange Lebensdauer sowie im Falle der Ausbildung als Sekundärelement auch durch große Anzahl erreichbarer Lade- und Entladezyklen aus.

Obwohl bevorzugt vorgesehen ist, daß daselektrochemische Element ein Metall-Sauerstoff-Element ist, ist es jedoch auch möglich, es so auszubilden, daß auch seine zweite Elektrode eine Metallelektrode ist. Diese zweite Metallelektrode ist dabei so auszubilden, daß sie beim Entladen die positive Kathode bildet. Beispielsweise könnte diese zweite Elektrode aus Nickel und die erste Elektrode aus Zink oder Aluminium bestehen. Auch andere Metalle kommen für die beiden Metallelektroden infrage. Wichtig ist, daß auch bei einem solchen zwei Metallelektroden aufweisenden Element beim zweiten Elektrolyten während des Entladens fortlaufend OH-Ionen entstehen, die zur ersten Elektrode als Ladungstransportträger wandern können.

Die erste Elektrode des Elementes kann in vielen Fällen mit besonderem Vorteil eine Aluminium-Elektrode sein, da diese besonders hohe elektrische Spannung des neuartigen Elementes ermöglicht. Auch ist Aluminium kostengünstig und hat nur geringes Gewicht und ist ferner dreiwertig. Aluminium ermöglicht also die Schaffung von Elementen besonders hoher Energiedichte, geringen Gewichtes und Volumens. Es können jedoch auch andere Metalle für die erste Elektrode eingesetzt werden, vorzugsweise Zink oder Magnesium, oder auch beispielsweise Eisen, Lithium oder dergl.

Gemäß einer Weiterbildung der Erfindung kann vorgesehen sein, daß der ersten Elektrode geringe Mengen Erdalkalimetall zulegiert sind und/oder im ersten Elektrolyten vor dem ersten Laden des Elementes noch ungelöstes Erdalkalihydroxid, vorzugsweise Calciumhydroxid enthalten ist, das beim erstmaligen Laden des Elementes sich im ersten Elektrolyten löst, so daß sich dann das Erdalkalimetall beim ersten Laden an der ersten Elektrode zusammen mit dem Hauptmetall der Elektrode niederschlägt. Und zwar kann in letzterem Fall so vorgegangen werden, daß die massive erste Elektrode erst durch das erste Laden gebildet wird, indem man einen metallischen Träger, z. B. einen Metalldeckel des Behälters des Elementes vorsieht und in die den ersten Elektrolyten enthaltende Kammer Metallhydroxid, z. B. in pastöser Form einbringt, aus dem sich dann beim Laden das Hauptmetall für die erste Elektrode abspaltet, welches Metall dann zu dem genannten metallischen Träger wandert und sich hier in massiver, mit dem Laden dicker werdender Schicht als erste Elektrode niederschlägt. Durch den Zusatz geringer Mengen Erdalkalimetall zu dem Hauptmetall der ersten Elektrode kann die Abscheidung der Metallionen des Hauptmetalles an der ersten Elektrode beim Laden noch weiter verbessert werden im Sinne

noch besserer Gleichmäßigkeit der Anlagerung der Metallionen des im ersten Elektrolyten dissoziierten Metallsalzes an die erste Elektrode beim Laden. Der Zusatz an Erdalkalimetall kann gering sein, beispielsweise fünf Volumenprozent des Hauptmetalles der ersten Elektrode betragen. Der erste Elektrolyt kann ausschließlich oder im wesentlichen nur Metallionen enthalten, die dem in ihm gelösten Metallsalz entsprechen. Wenn in ihm noch mindestens ein anderes Metall gelöst enthalten ist, kann dies zwecks Erzielung von Sonderwirkungen vorgesehen sein, wie vorzugsweise die oben beschriebene Hinzufügung geringer Mengen Erdalkalimetall. Der erste Elektrolyt kann als Metallsalz zweckmäßig Metallsulfat, Metallhydrogensulfat, Metallnitrat und/oder Metallchlorid gelöst enthalten. Mit Vorteil kann der erste Elektrolyt als Metallsalz auch ein Metallsalz einer wasserlöslichen organischen Säure, vorzugsweise einer ein-, zwei- oder dreibasischen Carbonsäure oder Hydroxycarbonsäure gelöst enthalten. Beispiele derartiger Säuren sind Essigsäure, Propionsäure, Oxalsäure, Malonsäure, Bernsteinsäure, Milchsäure, Äpfelsäure, Weinsäure und Citronensäure, wobei Essigsäure, Oxalsäure und Citronensäure besonders bevorzugt sind.

Falls mehrere unterschiedliche Metallsalze in dem ersten Elektrolyten gelöst sind, ist ihr Metall zweckmäßig dasselbe Metall, also beispielsweise Aluminium. Gegebenenfalls kommen auch andere Metallsalze infrage, beispielsweise Metallbromide, Metalljodide oder dergl. Bevorzugt kann der erste Elektrolyt ein einziges Metallsalz enthalten.
Mindestens ein Elektrolyt kann eine wässrige Lösung sein, d. h. als Lösungsmittel Wasser enthalten.

Jedoch sind in manchen Fällen auch andere Lösungsmittel denkbar, vorzugsweise Alkohole und ihre Derivate.

Der zweite Elektrolyt kann vorzugsweise eine wässrige Alkalilauge sein. Beispielsweise kann der zweite Elektrolyt eine Kalilauge sein, welche 20 - 45 Gewichtsprozent Kaliumhydroxid enthält. Erfindungsgemäße elektrochemische Elemente lassen sich lageunabhängig oder lageabhängig ausbilden bzw. einsetzen. Wenn das Element nach außen vollkommen geschlossen wird, kann es ohne weiteres als lageunabhängiges Element ausgebildet sein, sei es als Primärelement oder als Sekundärelement.

Wenn erfindungsgemäße Elemente als Sekundärelemente wiederaufladbar sind, kann in vielen Fällen eine gewisse Lageabhängigkeit der Rückbildung seiner Metallelektrode oder Metallelektroden beim Wiederaufladen bestehen. Dies sei an einem Beispiel erläutert. Wenn der erste Elektrolyt so getroffen ist, daß in ihm während des Entladens Metallhydroxid ausgefällt wird, dann lagert sich dies bei ruhendem Element entsprechend der Schwerkraft ab. Steht dabei das Element so, daß sich dieses Metallhydroxid an einer Stelle ansammelt, von wo beim Laden die aus ihm dabei wieder abgespaltenen Metallionen nicht gleichmäßig zur ersten Elektrode wandern würden, kann es dann zu Verdickungen der ersten Elektrode in der Nähe des angesammelten Metallhydroxids kommen, die im Laufe mehrerer bzw. vieler Ladezyklen dick und dicker werden können. Es handelt sich hier jedoch nicht um Dendriten, so daß solche Verdickungen normalerweise nicht stören und erst nach großen Anzahlen von Ladezyklen evtl.

stören können. Wenn die Gefahr solcher Verdickungen jedoch stört, kann man ohne weiteres die Betriebsstellung des Elementes so vorsehen, daß sich das Metallhydroxid gegenüber der ersten Elektrode gleichmäßig auf der Trennwand ablagert, indem die Trennwand ungefähr eben ist und sich ungefähr horizontal erstreckt und vertikal unterhalb der zu ihr vorzugsweise ungefähr parallelen ersten Elektrode angeordnet ist. Bei im Betrieb stationär angeordneten Elementen, beispielsweise bei Elementen, die dem Speichern von Solarenergie dienen, kann man problemlos diese ungefähr horizontale Erstreckung der Trennwand vorsehen. Wenn das Element dagegen in ein beim Fahren Schwankungen ausgesetztem Fahrzeug im Rahmen eines Akkus angeordnet ist, dann wird das pulverförmig abgeschiedene Metallhydroxid im Betrieb des Fahrzeuges ständig durch das Rütteln und Schütteln in im wesentlichen gleichmäßiger Verteilung gehalten und beim Laden bildet sich so die erste Elektrode mit ungefähr gleichmäßig anwachsender Dicke zurück. Das Element ist dann in diesem Fall trotz des Ausfällens von Metallhydroxid während des Entladens praktisch lageunabhängig einsetzbar, vorausgesetzt, daß das Metallhydroxid durch das Rütteln und Schütteln beim fahrenden Fahrzeug weitgehend in Schwebe gehalten wird. Wenn dagegen auch bei fahrendem Fahrzeug sich das Metallhydroxid weitgehend oder vollständig der Schwerkraft folgend an einer bestimmten Stelle des Elementes ansammelt, dann ist es ebenfalls zweckmäßig, es so anzuordnen, daß seine Trennwand im Ruhezustand des Fahrzeuges ungefähr horizontal gerichtet ist.

Eine besonders vorteilhafte Weiterbildung der Erfindung sieht vor, daß im ersten Elektrolyten eine für den ersten Elektrolyten durchlässige, jedoch für die beim Entladen entstehenden, im ersten Elektrolyten unlöslichen Reaktionsprodukte undurchlässige Zwischenwand in Richtung auf die Anode zu bis zum Anliegen an ihr beweglich ist und sich mit der von der Anode abgewendeten Rückseite an ein starres Lochgitter abstützt. Dabei kann vorgesehen sein, daß diese vertikale Relativbewegung zwischen Zwischenwand und Anode durch Anschläge so begrenzt wird, daß ein vorbestimmter minimaler Abstand zwischen ihnen nicht unterschritten werden kann, oder daß Zwischenwand und Anode aneinander mit Druck zur Anlage kommen können. Durch eine solche Relativbewegungsmöglichkeit zwischen Anode und Zwischenwand - die bevorzugt durch vertikale Beweglichkeit der Zwischenwand bei fester Anordnung der Anode erreicht sein kann - werden die sich beim Entladen an der Anode abscheidenden, festen Reaktionsprodukte, wie Metalloxid und dergleichen, die beispielsweise pulverförmige Konsistenz haben können, durch die Zwischenwand an die Anode angedrückt und können so auch verdichtet werden, wobei bei der Verdichtung zwischen ihnen befindlicher Elektrolyt, einschließlich von sich beim Entladen bildendem Wasser, zum Teil herausgedrückt wird und durch die Zwischenwand hindurch fließen kann. Auch können die verdichteten Reaktionsprodukte durch die Zwischenwand am Verrutschen auf der Anode gehindert werden. Durch die Größe der Belastung der Zwischenwand kann man die Dichte der Reaktionsprodukte in gewünschter Weise vorsehen. Dabei wird durch diese Reaktionsprodukte der Abstand zwischen der Zwischenwand und der Anode entsprechend ihrem beim Entladen zunehmendem Volumen durch den von ihnen ausgehenden Druck vergrößert. Wenn sich beim Laden die Reaktionsprodukte wieder im Elektrolyt unter Bildung von Metallionen zersetzen, verringert sich dann der Abstand zwischen Zwischenwand und Anode wieder gegebenenfalls bis zum Anliegen der Zwischenwand an die Anode. Auch ist vorteilhaft, daß die bewegliche Zwischenwand Ansätze von Dendriten an die Anode andrücken kann, falls evtl. solche Ansätze entstehen könnten. Je näher die Zwischenwand an die Anode angedrückt wird, desto geringer wird die Elektrolytmenge zwischen Zwischenwand und Anode. Dadurch wird die Tendenz der Anode, Metalloxide und Metallhydroxide zu bilden, verstärkt, das heißt, daß derartige Reaktionsprodukte nicht in Lösung gehen, sondern schneller ausfallen. Die Reaktionsprodukte verteilen sich gleichmäßiger über die gesamte Fläche der Zwischenwand und gewährleisten dadurch beim Laden einen gleichmäßigeren Überzug auf der Anode. Ein weiterer Vorteil besteht darin, daß sich beim Laden geringere Mengen Wasserstoff entwickeln, je geringer der Abstand zwischen Anode und Zwischenwand ist. Dies wirkt sich besonders vorteilhaft in dem Fall aus, bei dem das Element Rüttelbewegungen ausgesetzt ist oder in Schräglage gerät, weil dann die Reaktionsprodukte sich nicht an einer Stelle ansammeln können und so eine Verdickungsmöglichkeit der Anode an einer Stelle beim Laden vermieden wird.

Die Zwischenwand ist zweckmäßigerweise so ausgebildet, daß sie zwar für den Elektrolyten und damit auch für sich bildendes Wasser durchlässig ist, jedoch für die sich beim Entladen an der Anode bildenden festen Reaktionsprodukte, wie Metalloxid und dergleichen, sowie für Dendriten undurchlässig ist.

Gemäß einer bevorzugten Ausführungsform ist die Zwischenwand flexibel und vorzugsweise auch kompressibel und liegt in besonders bevorzugter Weise in Form

eines Polsters vor. In diesem Fall kann sie beispielsweise mit ihrem Rand fest mit dem Rand der Anode oder mit der Behälterwand des Elements oder einem sonstigen relativ zur Anode unbeweglich angeordneten Teil verbunden sein. Deshalb sieht eine weitere bevorzugte Ausführungsform Widerlager an der Behälterwand des Elements vor, auf denen Federmittel angeordnet sind, die andererseits mit dem Rand der Zwischenwand in Verbindung stehen. Solche Federmittel können beispielsweise aus Glasfasermaterial oder nicht vom Elektrolyten oder den Reaktionsprodukten angreifbaren Materialien bestehen. Hierbei hat es sich als besonders zweckmäßig herausgestellt, wenn die Zwischenwand eine ausreichende Eigensteifigkeit aufweist. Dies kann dadurch erreicht werden, daß die Zwischenwand aus einem Rahmen besteht, an den die Federmittel angreifen können, und in den das Material der Zwischenwand eingespannt ist.

Als Material für die Zwischenwand kommen in erster Linie Schaumkunststoffe mit einer ausreichenden Elastizität und Offenporigkeit in Betracht, wobei der Durchmesser der Poren den Durchgang des Elektrolyten und des Wassers gestattet, feste Reaktionsprodukte jedoch nicht durchläßt. Das Material für die Zwischenwand kann auch ein Faservlies aus gegenüber den Reaktionsprodukten und dem Elektrolyten beständigen Materialien sein, wobei die Kreuzungspunkte der Fasern vorzugsweise festgelegt sind. Insbesondere kommen hierfür alkalibeständige Faservliese aus Kunststoffen oder Cellulose in Frage. In der Regel besitzen Faservliese keine genügende Eigensteifigkeit, so daß es vorteilhaft ist, sie auf einem Gitter, Netz oder Sieb, beispielsweise einem Lochgitter, aufzubringen, das mit einem Rahmen fest verbunden ist.

Besteht die Zwischenwand aus einem Schaumkunststoff, so kann es in vielen Fällen vorteilhaft sein, auf der der Anode zugekehrten Oberfläche der Zwischenwand ein Diaphragma anzuordnen, das für den ersten Elektrolyten durchlässig, jedoch für die beim Entladen entstehenden, im ersten Elektrolyten unlöslichen Reaktionsprodukte undurchlässig ist.

Es versteht sich, daß die Erfindung nicht auf ungefähr ebene Ausbildung der ersten Elektrode und der Trennwand und gegebenenfalls der zweiten und/oder dritten Elektrode beschränkt ist. Es sind auch andere Ausbildungen möglich, bspw. konzentrische Anordnung der Elektroden und der Trennwand.

Erfindungsgemäße Elemente können vorzugsweise zu Batterien oder Akkumulatoren zusammengesetzt sein, die wegen ihrer hohen Energiedichte, ihres geringen Volumens und ihres geringen Gewichtes sich u. a. auch hervorragend als Akkumulatoren zum Speichern von Solarenergie und auch für den Einsatz in Kraftfahrzeugen eignen.

Wie oben erwähnt, eignet sich für den zweiten Elektrolyten bevorzugt Alkalilauge. In manchen Fällen können jedoch auch andere Lösungen für den zweiten Elektrolyten infrage kommen, insbesondere basisch reagierende Lösungen, beispielsweise wässrige Salmiaklösung und basisch reagierende Phosphatlösungen.

In der Zeichnung sind Ausführungsbeispiele der Erfindung dargestellt.

Die beiden Figuren 1 und 2 zeigen in schematischer Darstellung je einen Längsschnitt durch ein elektrochemisches Metall-Luft-Sekundärelement 10. Das in Fig. 1 dargestellte Element 10 weist zwecks Zutritt von Luft zu seinem Lochboden 18 einen auf Füßen 18' stehenden, topfförmigen Behälter 16 aus Kunststoff auf, in dessen Decke 44 ein Entlüftungsloch 45 und auf dessen eine ebene Lochplatte bildenden starren, horizontal gerichteten ebenen Lochboden 18 eine als Luftkathode ausgebildete zweite Elektrode 11 angeordnet ist. Diese Luftelektrode 11 weist eine horizontale, ebene Schicht Aktivkohlepulver 12 als Katalysator auf, die zusammen mit einem zweiten flüssigen Elektrolyten 25 und einem ebenen, horizontal gerichteten Metallochblech 13 den Zwischenraum zwischen einem auf dem Lochboden 18 aufliegenden, gasdurchlässigen, jedoch flüssigkeitsundurchlässigen Diaphragma 14 und einem gas- und flüssigkeitsdurchlässigen ebenen Filter 15, das beispielsweise ein laugenbeständiges Faservlies aus Kunststoffasern sein kann und dessen Porengröße kleiner als die Korngröße des Aktivkohlepulvers 12 ist, ausfüllt.

Das Metallochblech 13, dessen Löcher mit dem Aktivkohlepulver 12 gefüllt sind, liegt auf dem Diaphragma 14 auf. Das Aktivkohlepulver 12 reicht jedoch über das Lochblech 13 hinaus nach oben bis zum Filter 15.

Das Metallochblech 13 besteht aus einem Metall, das weder beim Laden, noch beim Entladen des Elementes 10 reagiert, beispielsweise aus Nickel. Dieses Lochblech 13 ist galvanisch an den Entlade-Pluspol 19 angeschlossen, der also beim Entladen des Elementes 10 dessen Pluspol 19 bildet. Dieser Entlade-Pluspol 19 kann zwar auch der Lade-Pluspol beim Laden des Elementes 10 sein, jedoch ist es, wie bereits oben erwähnt, besonders zweckmäßig, für das Laden einen gesonderten Lade-Pluspol 21 vorzusehen.

Zu diesem Zweck erstreckt sich im Abstand oberhalb des Filters 15 eine zweite, gas- und flüssigkeitsdurchlässige, ebene, metallische Lochplatte 20 horizontal und parallel zu ihm, die galvanisch an den Lade-Pluspol 21 des Elementes 10 angeschlossen ist. An diesem Lade-Pluspol 21 wird beim Laden positive Ladespannung angelegt. In geringem Abstand oberhalb dieser Lochplatte 20, die eine dritte Elektrode bildet, ist eine ebene und sich ebenfalls horizontal erstreckende, im ganzen mit 22 bezeichnete Trennwand angeordnet, die aus zwei im Abstand voneinander angeordneten, ebenen, sich horizontal parallel zueinander erstreckenden Molekularsieben 23, 23' und einem den Zwischenraum zwischen ihnen ausfüllenden dritten flüssigen Elektrolyten 24 besteht.

Der zweite Elektrolyt 25 füllt den Zwischenraum zwischen dem Diaphragma 14 und dem Molekularsieb 23' aus und kann ebenfalls zweckmäßig flüssig sein.

Im Abstand oberhalb der Trennwand 22 befindet sich eine plattenförmige, ebene, sich ebenfalls horizontal erstreckende, massive erste Elektrode 27 aus Metall, die an einem plattenförmigen, ebenen Träger 26 angeordnet ist. Der Träger 26 besteht aus Kunststoff, der unterseitig mit einer aufgedampften Schicht 26' eines an den elektrochemischen Reaktionen nicht teilnehmenden Metalles bedampft ist, die die Elektrode 27 kontaktiert und an den negativen Pol 30 des Elementes 10 galvanisch angeschlossen ist. Die Metallelektrode 27 bildet die negative Anode dieses Elementes 10. Durch den Träger 26 und die erste Elektrode 27 führt eine Kunststoffleitung 37 hindurch, die die den ersten Elektrolyten enthaltenden beiden Kammern 36 und 46, wie dargestellt, miteinander verbindet.

Der Behälter 16 wie auch der Träger 26 nehmen an den elektrochemischen Reaktionen nicht teil, sind also ständig inaktiv. Der Behälter 16 und der Kunststoff des Trägers 26 können beispielsweise aus Polyäthylen, Polypropylen, PVC oder dergl. bestehen.

Der Zwischenraum zwischen der durch das Molekularsieb 23 gebildeten horizontalen Oberseite der Trennwand 22 und der ersten Elektrode 27 ist mit einem ersten flüssigen Elektrolyten 31 gefüllt, bei dem es sich um eine wässrige Metallsalzlösung handelt, deren Metall dem Metall oder dem Hauptmetall der ersten Elektrode 27 entspricht.

Der zwischen den beiden Molekularsieben 23, 23' befindliche dritte Elektrolyt 24 der Trennwand 22 ist ebenfalls eine wässrige Metallsalzlösung, deren Säurerest dem Säurerest des im ersten Elektrolyten 31 gelösten Metallsalzes entsprechen kann. Der zweite Elektrolyt 25 kann eine Alkalilauge sein, deren Alkalimetall dem Metall des im dritten Elektrolyten gelösten Metallsalzes entsprechen kann. Die Alkalilauge ist ebenfalls eine wässrige Lösung. Die Konzentrationen der in den drei Elektrolyten 24, 25, 31 gelösten Metallverbindungen sind nicht kritisch, sollten jedoch so aufeinander abgestimmt sein, daß keiner der Elektrolyten die Neigung hat, einem benachbarten Elektrolyten Wasser in störendem Ausmaße zu entziehen, damit jeder Elektrolyt den ihm zugeordneten Raum ausfüllt.

Die Volumen der Elektrolyten 24, 25 und 31 bleiben beim Laden und Entladen im wesentlichen gleich. Unter

Umständen kann sich dann, wenn das Element 10 überladen wird, Lösungsmittel elektrolytisch zersetzen. Dies kann man jedoch an dem Anstieg der Ladespannung erkennen und erforderlichenfalls vorsehen, daß das Laden selbsttätig beendet wird, wenn der Anstieg der Ladespannung auf die Gefahr des Überladens hinweist. Auch andere Möglichkeiten zur Vermeidung von Überladen bestehen.

Die oben- und untenseitig von der Decke 44 und dem Träger 26 begrenzte oberste Kammer bildet eine Ausgleichkammer 46, durch die problemlos sichergestellt wird, daß alle Elektrolyten den Innenraum des Elementes 10 stets im erforderlichen Maß ausfüllen, indem die Ausgleichskammer 46 ersten Elektrolyten enthält und die Molekularsiebe 23, 23' für deren aus Wasser bestehendes Lösungsmittel durchlässig sind.

Die beiden Molekularsiebe 23, 23' der Trennwand 22 sind an der Umfangswandung des Behälters 16 abgedichtet befestigt, beispielsweise in nicht dargestellter Weise eingespannt. Das untere Diaphragma 14 kann beispielsweise auf den Lochboden 18 aufgeklebt sein. Auch das Filter 15 ist an der Umfangswand des Behälters 16 abgedichtet befestigt.

Es ist ferner eine Entlüftungsleitung 33 vorhanden, die aus der den zweiten Elektrolyten 25 enthaltenden Kammer 34 des Elementes 10 durch die Behälterumfangswand hindurch bis zur Decke 44 nach außen führt zwecks Ableitens von beim Laden im zweiten Elektrolyten 25 entstehendem Sauerstoff.

Die Schicht 26' besteht aus einem Metall, das beim Laden und Entladen des Elementes 10 keine galvanische Spannung zu den Lochblechen 13, 20 entwickelt und deshalb inaktiv bleibt. Beispielsweise kann es aus Nickel bestehen und die beiden metallischen Lochbleche 13, 20 können dann zweckmäßig ebenfalls aus diesem Metall, also beispielsweise aus Nickel bestehen.

Dagegen geht das Metall der ersten Elektrode 27 beim Entladen in Lösung bis es aufgebraucht ist. Die Schicht 26' vermag keine Stromlieferung herbeizuführen, so daß dann das Element 10 vollständig entladen ist. Beim Wiederaufladen bildet sich die erste Metallelektrode 27 an der Metallschicht 26' des Trägers 26 wieder aus, ohne daß dabei Dendriten entstehen. Auch ist die sich wieder bildende erste Metallelektrode 27 in sich massiv und es besteht so keine Gefahr des Abbröckelns von Metall von ihr.

Die aus der den ersten Elektrolyten enthaltenen Kammer 36 des Elementes in die Kammer 46 führende Leitung 37 kann auch dem Ableiten von Wasserstoff, der bei der beim Laden im ersten Elektrolyten stattfindenden Reduktion unverbraucht bleibt, aus der Kammer 36 dienen.

Es sei erwähnt, daß die Molekularsiebe 23, 23' eine

Trenngrenze haben können, die Sauerstoff-Moleküle ($O_2$) durchläßt. Dennoch geht der beim Laden sich im zweiten Elektrolyten 25 bildende Sauerstoff nicht durch das Molekularsieb 23 hindurch, sondern sammelt sich an diesem zu Gasblasen an, die dann durch die Entlüftungsleitung 33 nach außen entweichen können.

Es sei hier noch erwähnt, daß es zum besseren Ableiten der beim Laden im zweiten Elektrolyten entstehenden Sauerstoff-Gasblasen und gegebenenfalls der im ersten Elektrolyten entstehenden Wasserstoff-Gasblasen zu den Leitungen 33, 37 zweckmäßig sein kann, daß das Element 10 im Betrieb geringfügig zur Horizontalen geneigt ist, was beispielsweise durch geringfügig unterschiedliche Höhe der Füße 18' erreicht werden kann. Oder man kann auch vorsehen, daß das Molekularsieb 23' bzw. die gesamte Trennwand 22 und auch die erste Elektrode 27 mit Träger 26 schwach zur Horizontalen geneigt werden und die anderen im Elektrolyten befindlichen Teile, wie das Molekularsieb 23, das Diaphragma 14 usw. horizontal ausgerichtet sind. Es kann gegebenenfalls auch eine schwache Wölbung des als Diaphragma ausgebildeten Molekularsiebes 23' (das Molekularsieb 23 kann dem Molekularsieb 23' entsprechen und ebenfalls ein Diaphragma sein) und der ersten Elektrode 27 vorgesehen sein, wobei die Entlüftungsleitungen 33, 37 dann an den höchsten Stellen dieser Wölbungen in die betreffenden Kammern 36, 34 einmünden.

Die Arbeitsweise dieses Elements sei an folgendem, untersuchten Beispiel beschrieben:

Die erste Elektrode 27 bestand bei der Untersuchung aus Zink. Der erste Elektrolyt 31 bestand aus wässriger Zinksulfatlösung, pH-Wert ca. 4-6. Der dritte Elektrolyt 24 bestand aus wässriger Kaliumsulfatlösung, pH-Wert ca. 5-8. Der zweite Elektrolyt 25 bestand aus Kalilauge. Die Molekularsiebe 23, 23' hatten jeweils eine Trenngrenze von 50, so daß sie weder für Zink, noch für $SO_4$ und KOH durchlässig waren. Dagegen sind diese Molekularsiebe durchlässig für H, OH und $H_2O$. Die dritte Elektrode 20 und das Lochblech 13 bestanden aus Nickel.
Beim Entladen waren die Pole 19, 30 über die Leitung 40 und eine Last 41 miteinander verbunden und es spielten sich dann folgende Vorgänge beim Entladen ab:

An der am Diaphragma 14 beginnenden Luftkathode 11 tritt folgende Reaktion ein, indem in sie durch das Diaphragma 14 Luft eindringt:

$$2\ H_2O + O_2 + 4e^- \rightarrow 4\ OH^-$$

Der Sauerstoff stammt aus der Umgebungsluft.
Die hierbei gebildeten OH-Ionen wandern als Ladungsträger durch die Trennwand 22 hindurch in den ersten Elektrolyten 31 und in ihm spielt sich dann an der ersten Elektrode 27 folgende Reaktion ab:

$$2\ Zn + 4\ OH^- \rightarrow 2\ Zn(OH)_2 + 4e^-$$

Das sich bildende Zinkhydroxid $Zn(OH)_2$ wurde ausgefällt und sank auf das ebene, horizontal gerichtete Molekularsieb 23' und lagerte sich hier in gleichmäßiger Schicht ab. Sobald das gesamte Zink

der ersten Elektrode 27 verbraucht war, war dieses Sekundärelement 10 entladen.

Nach der Entladung wurde das Element 10 wieder geladen, indem der positive Pol der Ladespannungsquelle an den Ladepol 21 und der negative Pol der Ladespannungsquelle an den Pol 30 in nicht dargestellter Weise angeschlossen wurde. Die Ladespannung betrug ca. 1,8 V, wobei erwähnt sei, daß dem Element beim Entladen eine Spannung von ca. 1,2 bis 1,3 V ohne weiteres entnommen werden kann. Beim Laden findet im zweiten Elektrolyten folgende Reaktion statt:

$$2\ H_2O - 4e^- \rightarrow O_2\uparrow + 4\ H^+$$

Die dritte Elektrode 20 ändert sich dabei nicht. Der sich bildende Sauerstoff $O_2$ entweicht durch die Entlüftungsleitung 33. Die sich im zweiten Elektrolyten 25 bildenden H-Ionen wandern als Ladungsträger durch den dritten Elektrolyten 24 der Trennwand 22 und deren Molekularsiebe 23, 23' hindurch in den ersten Elektrolyten 31 und es spielt sich in ihm folgende Reaktion ab:

$$2\ Zn(OH)_2 + 4\ H^+ \rightarrow 2\ Zn^{++} + 4\ H_2O$$

Die hierbei aus dem Zinkhydroxid $Zn(OH)_2$ frei werdenden Zink-Ionen schlugen sich als gleichmäßige, massive Zinkschicht 27 an der Metallschicht 26'

des Trägers 26 nieder. Damit entstand die erste Elektrode 27 beim Laden wieder als massive, ebene, umgefähr gleich dicke Zinkschicht. Sie haftet an dem Trägermetall sehr fest, kann sich also nicht ablösen. Bei der Wiederbildung der Elektrode 27 bildeten sich keine Dendriten, so daß eine hohe Anzahl von Lade- und Entladezyklen mit diesem Element 10 erreicht werden können.

Es zeigte sich, daß die im dritten Elektrolyten 24 befindlichen Kalium-Ionen weder beim Laden noch beim Entladen, noch in der übrigen Zeit durch das Molekularsieb 23 hindurch gingen, obwohl dessen Trenngrenze 50 betrug, also dieses Molekularsieb 23 wie auch das Molekularsieb 23' an sich für Kalium-Ionen durchlässig war. Es ist möglich, daß dieser Effekt mit darauf beruhen kann, daß die Kalium-Ionen im dritten Elektrolyten 24 keine Affinität zu den im ersten Elektrolyten 31 befindlichen Säureresten $SO_4$ mehr hatten, weil sie im dritten Elektrolyten an die in ihm befindlichen Säurereste $SO_4$ ausreichend fest angebunden waren und diese Verbindung $K_2SO_4$ ein über der Trenngrenze des Molekularsiebes 23 liegendes Molekulargewicht von ca. 174 hat. Damit verdünnt sich der zweite und dritte Elektrolyt 25 und 24 nicht irreversibel. Auch wurde festgestellt, daß die Selbstentladung des Sekundärelementes 10 äußerst gering ist, so daß es, wenn kein Strom entnommen wird, seine Ladung über sehr lange Zeit behält.

Die genannte Trenngrenze der Molekularsiebe 23, 23' war kleiner als das Atomgewicht von Zink und das

Molekulargewicht von $SO_4$ und von KOH, so daß sie weder Zink, noch den Säurerest $SO_4$, noch Kaliumhydroxid durchlassen.

Das in Fig. 2 dargestellte Sekundärelement 10 zeigt eine weitere bevorzugte Ausführungsform der Erfindung. Gleiche Bezugszeichen in den Fig. 1 und 2 haben die gleiche Bedeutung, so daß auf die entsprechenden Ausführungen bezüglich ihrer Bedeutung und Wirkungsweise auf Fig. 1 verwiesen werden kann.

Der wesentliche Unterschied zwischen den Ausführungsformen der Fig.1 und 2 besteht darin, daß bei der Ausführungsform gemäß Fig. 2 das Molekularsieb 23 und damit auch der dritte Elektrolyt 24 entfallen, so daß die Trennwand 22 durch das als Diaphragma, Membran oder dergl. ausgebildete Molekularsieb 23' gebildet ist. Ferner ist im ersten Elektrolyten 31 eine Zwischenwand 50 angeordnet, die für den ersten Elektrolyten 31 durchlässig, jedoch für die beim Entladen entstehenden, im ersten Elektrolyten 31 unlöslichen Reaktionsprodukte 52 undurchlässig ist. Die Zwischenwand 50 ist elastisch und in Richtung auf die Anode 27 zu beweglich und stützt sich mit der von der Anode abgewendeten Rückseite an einem starren Lochgitter 54 ab. Auf der anderen Seite der Zwischenwand 50 liegt ein für den ersten Elektrolyten durchlässiges, jedoch für die Reaktionsprodukte 52 undurchlässiges Diaphragma 51 auf, damit die Reaktionsprodukte nicht in die Zwischenwand 50 eindringen können. Diese Zwischenwand 50 ist etwas komprimiert und drückt das Diaphragma 51 an die Reaktionsprodukte 52 und damit diese an die Anode 27 federnd an. Im frisch geladenen Zustand des Elements 10 kann sich die elastische Zwischenwand 50 - gegebenenfalls mit dem darauf angeordneten Diaphragma 51 - praktisch vollständig an die die erste Elektrode bildende negative Anode 27 anlegen.

Vorzugsweise besteht die Zwischenwand 50 aus einem offenporigen elastischen Schaumkunststoff. Anstelle eines solchen elastischen Schaumkunststoffes kann gegebenenfalls ein elastisches, komprimierbares Faservlies oder dergleichen treten. Auch ist es möglich, die Zwischenwand 50 in sich starr auszubilden, so daß sie eine gewisse Eigensteifigkeit besitzt, und sie mittels örtlich eng begrenzten Federmitteln in Richtung auf die Anode 27 zu belasten. In diesem Fall kann das Lochgitter 54 entfallen und durch Widerlager für die Federmittel ersetzt werden.

Bei der Ausführungsform nach Fig. 2 hat es sich als zweckmäßig gezeigt, daß die Kammer 36 von der Kammer 46, die ebenfalls den ersten Elektrolyten 31 enthält und mit der Kammer 36 über eine Kunststoffleitung 37 verbunden ist, durch eine in die Kunststoffleitung 37 eingesetzte, für den ersten Elektrolyten 31 durchlässige Membran 53 getrennt ist, so daß zwar der erste Elektrolyt 31 ungehindert von der Kammer 36 in die Kammer 46 strömen kann und umgekehrt, aber keine Reaktionsprodukte 52 aus der Kammer 36 in die Kammer 46 gelangen können. Dadurch wird der ungehinderte Fluß des ersten Elektrolyten 31 gewährleistet, insbesondere bei einer Schräg- oder Senkrechtstellung des Elements 10.

Die Arbeitsweise des Elements 10 nach Ausführungsform gemäß Fig. 2 ist im wesentlichen die gleiche wie bei der in Fig. 1 angegebenen Arbeitsweise. Im geladenen Zustand des Elements 10 wird das Diaphragma 51 mittels der Zwischenwand 50 praktisch bis zum Anliegen an die Anode 27 gedrückt. Je weiter dann eine Entladung des Elements 10 fortschreitet, desto mehr wird zwar die Anode 27 abgetragen, doch sind die gebildeten Reaktionsprodukte 52 voluminöser und bewirken dadurch einen immer größer werdenden Abstand zwischen der Anode 27 und der Oberfläche des Diaphragmas 51. Durch den ständigen Druck der Zwischenwand 50 über das Diaphragma 51 auf die Reaktionsprodukte 52 werden letztere an einem Wandern gehindert. Sie verbleiben also im wesentlichen am

Ort ihres Entstehens und können somit insbesondere bei einer Schräg- oder Senkrechtstellung des Elements 10 keine Ansammlungen im Bereich der Kunststoffleitung 37 bilden.

Nach dem vollständigen oder praktisch vollständigen Entladen des Elements 10, das heißt, wenn praktisch das gesamte Anodenmetall in Metallionen überführt ist, wird das Element 10 in an sich üblicher Weise wieder geladen. Je weiter die Metallionen in den ungeladenen metallischen Zustand überführt werden und sich auf der Anode 27 niederschlagen, desto stärker legt sich das Diaphragma 51 an die Anode 27 an. Bei diesem Vorgang legen die Metallionen nur einen kurzen Weg zurück, wodurch eine Wasserstoffentwicklung weitgehend unterdrückt wird. Auch ermöglicht dieses Element 10 nach Fig. 2 ebenfalls hohe Anzahlen von Lade- und Entladezyklen.

Die dargestellten Elemente 10 lassen sich auch als Primärelemente einsetzen. In diesem Fall ist es jedoch besonders zweckmäßig, sie so abzuwandeln, daß sie nur noch die für ihre Funktion als Primärelemente notwendigen Konstruktionsmerkmale aufweisen, also diejenigen Konstruktionsmerkmale der Elemente 10 nach den Fig. 1 und 2 wegzulassen sind, die nur für das Laden vorgesehen sind, beispielsweise die Entlüftungsleitung 33 und die dritte Elektrode 20 mit Ladepol 21.

## Patentansprüche

1. Elektrochemisches Element, welches eine metallische erste Elektrode, die seine negative Anode bildet, und einen mit ihr beim Entladen chemisch reagierenden, gelöstes Metallsalz enthaltenden ersten Elektrolyten aufweist und ferner eine zweite Elektrode hat, die die positive Kathode bildet, der ein zweiter Elektrolyt zugeordnet ist, der vom ersten Elektrolyten durch eine poröse Trennwand getrennt ist, d a d u r c h g e k e n n z e i c h n e t , daß im zweiten Elektrolyten (25) beim Entladen des Elements (10) negative OH-Ionen als Ladungsträger gebildet werden, für die die Trennwand (22) durchlässig ist, und daß die Trennwand (22) als eine den Übertritt des Metalls und der Säurereste des im ersten Elektrolyten (31) gelösten Metallsalzes in den zweiten Elektrolyten (25) verhindernde Sperre wirkt.

2. Element nach Anspruch 1, dadurch gekennzeichnet, daß es ein wiederaufladbares Sekundärelement (10) ist und die Trennwand (22) für beim Laden sich im zweiten Elektrolyten (25) bildende, positiv geladene Wasserstoffionen durchlässig ist, so daß diese in den ersten Elektrolyten (31) einwandern können.

3. Element nach Anspruch 1, dadurch gekennzeichnet, daß es ein nicht wiederaufladbares Primärelement ist.

4. Element nach einem der vorhergehenden Ansprüche, dadurch gekennzeichnet, daß die Trennwand (22) ein einziges Molekularsieb (23') aufweist, dessen Trenngrenze so getroffen ist, daß sie für die OH- und für H-Ionen und vorzugsweise auch für das Lösungsmittel der Elektrolyten durchlässig ist, jedoch nicht für die anderen im zweiten Elektrolyten (25) enthaltenen Moleküle und/oder Ionen.

5. Element nach einem der Ansprüche 1 bis 3, dadurch gekennzeichnet, daß die Trennwand (22) zwei Molekularsiebe (23,23') aufweist, zwischen denen sich ein dritter Elektrolyt (24) befindet, derart, daß der Übergang von Kationen aus dem zweiten Elektrolyten (25) in den ersten Elektrolyten (31) mit Ausnahme von Wasserstoffkationen verhindert wird.

6. Element nach Anspruch 5, dadurch gekennzeichnet, daß der dritte Elektrolyt (24) Metallsalz gelöst enthält, vorzugsweise Alkalimetallsalz.

7. Element nach Anspruch 6, dadurch gekennzeichnet, daß der Säurerest des im dritten Elektrolyten (24) gelösten Metallsalzes dem Säurerest des im ersten Elektrolyten (31) gelösten Metallsalzes entspricht.

8. Element nach Anspruch 6, dadurch gekennzeichnet, daß der Säurerest des im dritten Elektrolyten (24) gelösten Metallsalzes stärker sauer als der Säurerest des im ersten Elektrolyten (31) gelösten Metallsalzes ist.

9. Element nach Anspruch 6, 7 oder 8, dadurch gekennzeichnet, daß das Metall des im dritten Elektrolyten (24) gelösten Metallsalzes dem Metall einer im zweiten Elektrolyten (25) gelösten Metallverbindung entspricht.

10. Element nach Anspruch 6, 7, 8 oder 9, dadurch gekennzeichnet, daß der Säurerest des Metallsalzes des dritten Elektrolyten (24) ein Atomgewicht über der Trenngrenze des den dritten Elektrolyten (24) von dem zweiten Elektrolyten (25) trennenden Molekularsiebes (23') aufweist.

11. Element nach einem der vorhergehenden Ansprüche, dadurch gekennzeichnet, daß die zweite Elektrode (11) eine Sauerstoff-Kathode, vorzugsweise eine Luftkathode ist, die beim Entladen den positiven Pol (19) des Elementes (10) bildet.

12. Element nach Anspruch 11, dadurch gekennzeichnet, daß die zweite Elektrode (11) als Katalysator Aktivkohlepulver (12) aufweist.

13. Element nach Anspruch 12, dadurch gekennzeichnet, daß die Aktivkohle (12) von einem Metallgitter oder dergleichen (13) kontaktiert ist.

14. Element nach Anspruch 12 oder 13, dadurch gekennzeichnet, daß es eine dritte Elektrode (20) aufweist, die dem Anschluß eines positven Poles einer dem Laden des Elementes dienenden Ladestromquelle dient und daß die dritte Elektrode sich außerhalb des Aktivkohlepulvers (12) jedoch noch innerhalb des zweiten Elektrolyten (25) befindet.

15. Element nach Anspruch 14, dadurch gekennzeichnet, daß die Aktivkohleschicht (12) durch ein für ihr Aktivkohlepulver undurchlässiges, jedoch für den zweiten Elektrolyten (25) durchlässiges Filter (15) von dem über ihr befindlichen Bereich des zweiten Elektrolyten, in welchem sich die dritte Elektrode (20) befindet, getrennt ist.

16. Element nach einem der vorhergehenden Ansprüche, dadurch gekennzeichnet, daß dem zweiten Elektrolyten (25) eine Entlüftungsleitung (33) für sich beim Laden bildenden Sauerstoff zugeordnet ist.

17. Element nach einem der Ansprüche 1 bis 10, dadurch gekennzeichnet, daß die zweite Elektrode ebenfalls eine Metallelektrode ist, die beim Entladen den positiven Pol bildet.

18. Element nach einem der vorhergehenden Ansprüche, dadurch gekennzeichnet, daß der zweite Elektrolyt einen pH-Wert aufweist, der größer als 7 ist.

19. Element nach einem der vorhergehenden Ansprüche, dadurch gekennzeichnet, daß dem ersten Elektrolyten eine Entlüftungsleitung (45) für denjenigen Wasserstoff zugeordnet ist, der bei der beim Laden im ersten Elektrolyten auftretenden chemischen Reduktion unverbraucht bleibt.

20. Element nach einem der vorhergehenden Ansprüche, dadurch gekennzeichnet, daß der zweite Elektrolyt (25) Metallionen enthält und daß die Trennwand (22) den Übertritt dieser Metallionen in den ersten Elektrolyten (31) verhindert.

21. Element nach einem der vorhergehenden Ansprüche, dadurch gekennzeichnet, daß die Trennwand (22) bezüglich der den ersten Elektrolyten (31) und den zweiten Elektrolyten (25) bildenden

Komponenten und der sich beim Entladen des Elementes (10) bzw. im Falle eines Sekundärelementes (10) auch beim Laden bildenden Reaktionsprodukte nur die OH- und H-Ionen und vorzugsweise auch das Lösungsmittel, vorzugsweise Wasser, der Elektrolyten durchläßt.

22. Element nach einem der Ansprüche 1 bis 21, dadurch gekennzeichnet, daß die erste Elektrode (27) eine Zink-Elektrode oder eine Aluminium-Elektrode oder eine Magnesium-Elektrode ist.

23. Element nach einem der vorhergehenden Ansprüche, dadurch gekennzeichnet, daß der ersten Elektrode (27) geringe Mengen von Erdalkalimetall zulegiert sind und/oder im ersten Elektrolyten (31) vor dem ersten Laden des Elementes eine geringe Menge Erdalkalihydroxid, vorzugsweise Calciumhydroxid, enthalten ist, das beim erstmaligen Laden sich im ersten Elektrolyten löst und dessen Erdalkalimetall sich dann an der ersten Elektrode (27) zusammen mit deren Hauptmetall niederschlägt.

24. Element nach einem der vorhergehenden Ansprüche, dadurch gekennzeichnet, daß der erste Elektrolyt (31) ausschließlich oder im wesentlichen nur Metallionen enthält, die dem Metall des in ihm gelösten Metallsalzes entsprechen.

25. Element nach einem der vorhergehenden Ansprüche, dadurch gekennzeichnet, daß der erste Elektrolyt (31) als Metallsalz ein Metallsulfat gelöst enthält.

26. Element nach einem der Ansprüche 1 bis 24, dadurch gekennzeichnet, daß der erste Elektrolyt (31) als Metallsalz ein Metallhydrogensulfat gelöst enthält.

0098585

27. Element nach einem der Ansprüche 1 bis 24, dadurch gekennzeichnet, daß der erste Elektrolyt (31) als Metallsalz ein Metallnitrat gelöst enthält.

28. Element nach einem der Ansprüche 1 bis 24, dadurch gekennzeichnet, daß der erste Elektrolyt (31) als Metallsalz ein Metallchlorid gelöst enthält.

29. Element nach einem der Ansprüche 1 bis 24, dadurch gekennzeichnet, daß der erste Elektrolyt (31) als Metallsalz ein Metallsalz einer wasserlöslichen organischen Säure gelöst enthält.

30. Element nach Anspruch 29, dadurch gekennzeichnet, daß der erste Elektrolyt (31) als Metallsalz ein Metallsalz einer wasserlöslichen ein-, zwei- oder dreibasischen Carbonsäure oder Hydroxycarbonsäure gelöst enthält.

31. Element nach Anspruch 30, dadurch gekennzeichnet, daß der erste Elektrolyt (31) als Metallsalz ein Metallsalz der Essigsäure gelöst enthält.

32. Element nach Anspruch 30, dadurch gekennzeichnet, daß der erste Elektrolyt (31) als Metallsalz ein Metallsalz der Citronensäure gelöst enthält.

33. Element nach einem der vorhergehenden Ansprüche, dadurch gekennzeichnet, daß mindestens ein Elektrolyt eine wässrige Lösung ist.

34. Element nach Anspruch 33, dadurch gekennzeichnet, daß der zweite Elektrolyt (25) wässrige Alkalilauge ist, die vorzugsweise 20 bis 45 Gewichtsprozent Alkalihydroxid enthält.

35. Element nach einem der vorhergehenden Ansprüche, dadurch gekennzeichnet, daß seine Elektroden (11,27) und die Trennwand (22) ungefähr eben und im Abstand übereinander angeordnet sind und ihre Betriebsstellungen vorzugsweise ungefähr horizontal sind.

36. Element nach Anspruch 35, dadurch gekennzeichnet, daß die Trennwand (22) sich vertikal unterhalb der ersten Elektrode (27) befindet.

37. Element nach einem der vorhergehenden Ansprüche, dadurch gekennzeichnet, daß die Lösungsmittel der Elektrolyten (24,25,31;25,31) dieselbe chemische Verbindung sind und die Trennwand (22) für dieses Lösungsmittel durchlässig ist.

38. Element nach Anspruch 34, dadurch gekennzeichnet, daß der zweite Elektrolyt Kalilauge und/oder Natronlauge ist.

39. Element nach einem der vorhergehenden Ansprüche, dadurch gekennzeichent, daß der erste Elektrolyt (31) einen pH-Wert kleiner 7 aufweist.

40. Element nach einem der Ansprüche 1 - 38, dadurch gekennzeichnet, daß der erste Elektrolyt einen pH-Wert gleich 7 oder etwas größer als 7 aufweist.

41. Element nach mindestens einem der Ansprüche 1 bis 40, dadurch gekennzeichnet, daß im ersten Elektrolyten (31) eine für den ersten Elektrolyten (31) durchlässige, jedoch für die beim Entladen entstehenden, im ersten Elektrolyten (31) unlöslichen Reaktionsprodukte (52) undurchlässige

Zwischenwand (50) in Richtung auf die Anode (27) zu bis zum Anliegen an ihr beweglich ist und sich mit der von der Anode (27) abgewendeten Rückseite an ein starres Lochgitter (54) abstützt.

42. Element nach Anspruch 41, dadurch gekennzeichnet, daß die Zwischenwand (50) durch ein elastisches, offenporiges Polster aus Schaumkunststoff, Faservlies oder dergleichen gebildet ist, das an einem starren, für den ersten Elektrolyten (31) durchlässigen Lochgitter oder Widerlager (54) abgestützt ist.

43. Element nach Anspruch 41 oder 42, dadurch gekennzeichnet, daß die Zwischenwand (50) eine ausreichende Eigensteifigkeit aufweist und durch mindestens an einem Widerlager (54) sich abstützenden Federmittel oder dergleichen auf die Anode (27) zu belastet ist.

44. Element nach mindestens einem der Ansprüche 41 bis 43, dadurch gekennzeichnet, daß auf der der Anode (27) zugekehrten Oberfläche der Zwischenwand (50) ein Diaphragma (51) angeordnet ist, das für den ersten Elektrolyten (31) durchlässig, jedoch für die beim Entladen entstehenden, im ersten Elektrolyten (31) unlöslichen Reaktionsprodukte (52) undurchlässig ist.

45. Element nach einem der vorhergehenden Ansprüche, dadurch gekennzeichnet, daß die Trennwand (22) ein Molekularsieb(23') ist oder mindestens ein Molekularsieb (23, 23') aufweist, das als eine Membran, wie sie für die Umkehrosmose bekannt ist, ausgebildet ist.

0098585

Fig. 1

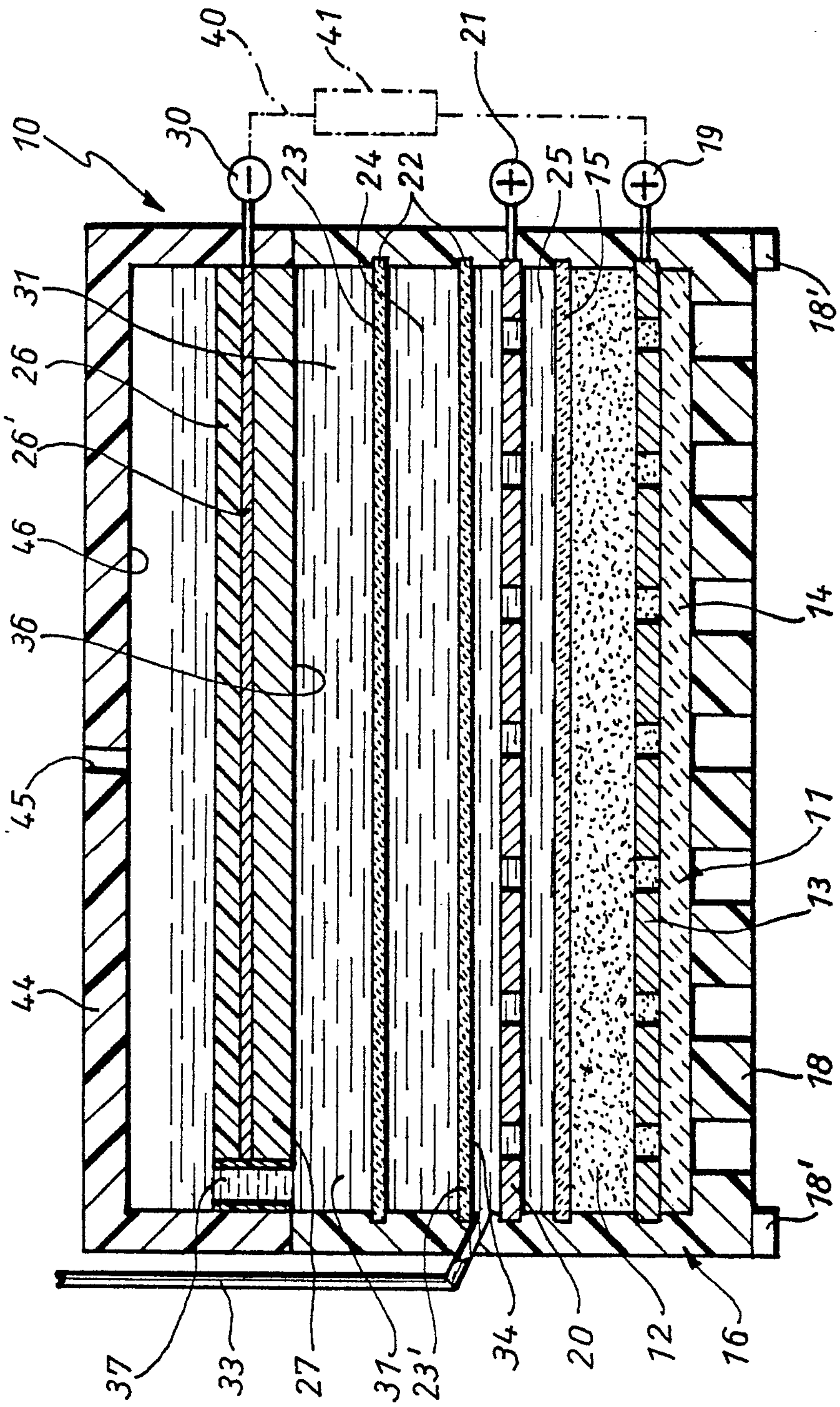

0098585

Fig. 2

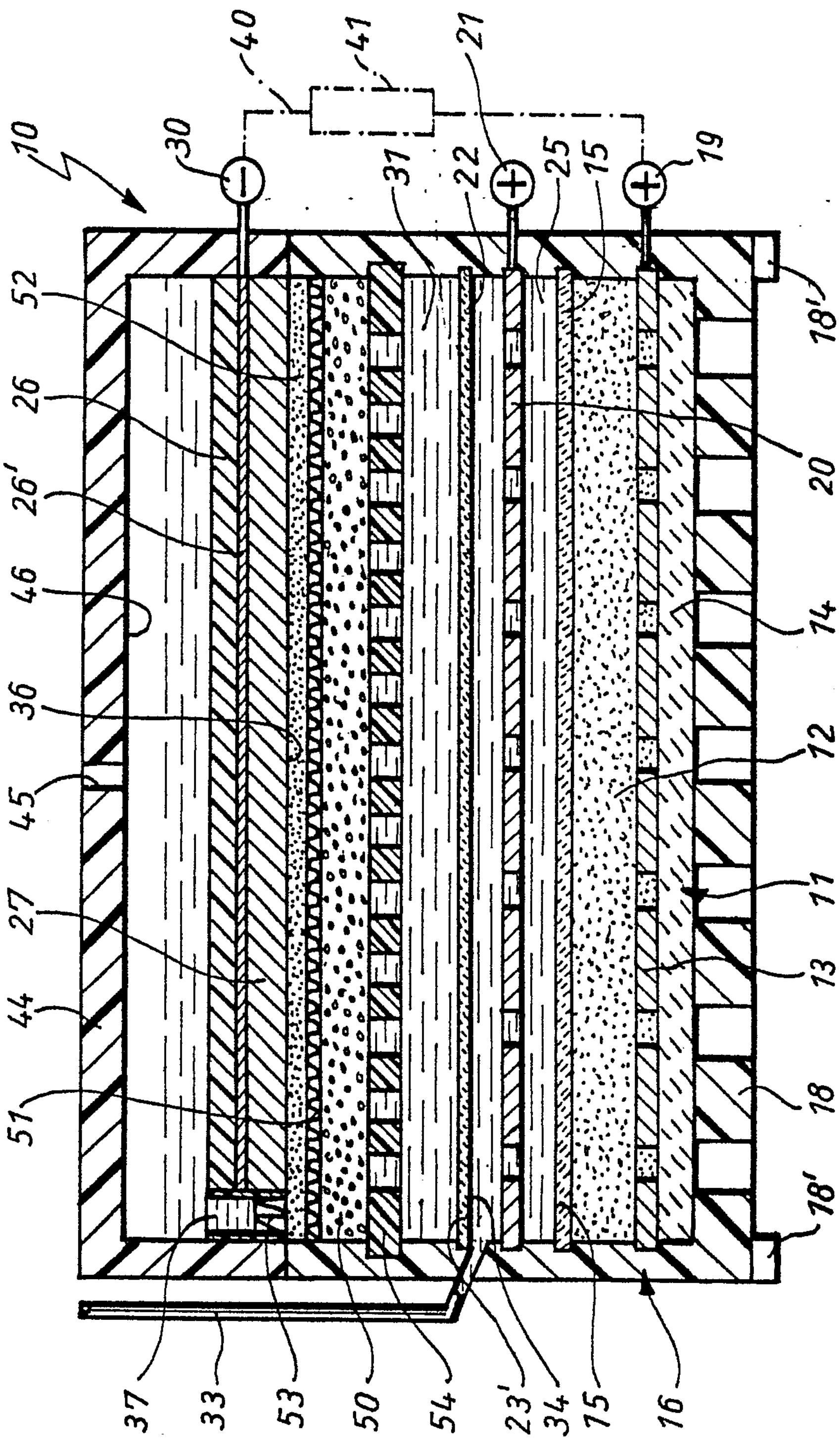

0098585
Nummer der Anmeldung

Europäisches Patentamt

# EUROPÄISCHER RECHERCHENBERICHT

EP 83 10 6558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 816 672 (SVENSKA ACKUMULATOR AKTIEBOLAGET JUNGNER) * Ansprüche 1,2,3,4,5; Figur 1; Seite 3, Zeile 10 - Seite 4, Zeile 11; Seite 5, Zeilen 5-22 * | 1,3,11 -13,22 ,25,33 | H 01 M 12/00<br>H 01 M 6/24<br>H 01 M 10/00 |
| A | DE-A-2 051 235 (NATIONAL RESEARCH DEVELOPMENT CORP.) * Figur 1; Ansprüche 1,2,4,5 * | | |
| A | JOURNAL OF APPLIED ELECTROCHEMISTRY, Band 11, Nr. 1, Januar 1981, Seiten 33-39, Chapmann and Hall Ltd., Oxford, GB. S. SATHYANARAYANA et al.: A new magnesium-air cell for long-life applications" * Seite 34, rechte Spalte, Zeile 44 - Seite 35, rechte Spalte, Zeile 21 * | | RECHERCHIERTE SACHGEBIETE (Int. Cl. 3) |
| A | US-A-3 716 413 (STEVE EISNER) | | H 01 M 6/24<br>H 01 M 12/08<br>H 01 M 12/06<br>H 01 M 12/04<br>H 01 M 12/00<br>H 01 M 8/22 |
| A | GB-A-2 059 673 (SOC. D'ETUDES ET DE RECHERCHES EN SOURCES D'ENERGIES NOUVELLES "LA CASTAGNE") | | |
| P,A | US-A-4 352 864 (R.C. STRUTHERS) | | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 14-10-1983 | D'HONDT J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82

0098585

Europäisches Patentamt

**EUROPÄISCHER RECHERCHENBERICHT**

Nummer der Anmeldung

EP 83 10 6558

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 220 690 (K.F. BLURTON et al.)<br>--- | | |
| P,A | US-A-4 390 602 (R.C. STRUTHERS)<br>----- | | |
| | | | RECHERCHIERTE SACHGEBIETE (Int. Cl. 3) |

Der vorliegende Recherchenbericht wurde für alle Patentansprüche erstellt.

| Recherchenort | Abschlußdatum der Recherche | Prüfer |
|---|---|---|
| DEN HAAG | 14-10-1983 | D'HONDT J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03.82